# FASCICULE DE BREVET EUROPEEN

(11) **EP 1 901 601 B1**
(45) Date de publication et mention de la délivrance du brevet: **18.02.2009**
(21) Numéro de dépôt: 06777628.6
(22) Date de dépôt: 06.07.2006
(51) Int. Cl.: A01C 7/08

(54) **TÊTE DE DISTRIBUTION DE SEMOIR À DOUBLE MODE DE FONCTIONNEMENT, COMPRENANT UN COUVERCLE DE RÉPARTITION HOMOGÈNE EN DENSITÉ D'UN VOLUME DE SEMENCE À L'INTÉRIEUR D'UNE PLURALITÉ DE DIVISEURS DE SEMENCE**
AUSGABEKOPF EINES SÄGERÄTES MIT ZWEI BETRIEBSARTEN UND EINER VERTEILERKLAPPE MIT GLEICHFÖRMIGER VERTEILUNG DER SAATGUTMENGENDICHTE IN MEHREREN SAATGUTTRENNERN
DUAL-OPERATING MODE SEEDING IMPLEMENT DISPENSING HEAD COMPRISING A DISTRIBUTING LID HOMOGENEOUS IN SEED VOLUME DENSITY INSIDE A PLURALITY OF SEED DIVIDERS

(30) Priorité: 13.07.2005 FR 0507563
(43) Date de publication de la demande: 26.03.2008
(73) Titulaire: Sulky Burel, 35220 Chateaubourg (FR)
(72) Inventeur: MONNERIE, Jacques-Olivier, F-35500 Montreuil sous Perouse (FR); CHEVALIER, Patrick, F-35220 Chateaubourg (FR); CLOCHARD, Daniel, F-35113 Domagne (FR)
(74) Mandataire: Bioret, Ludovic
(86) Numéro de dépôt international: PCT/EP2006/063986
(87) Numéro de publication internationale: WO 2007/006733

(56) Documents cités:
- EP-A- 0 309 608
- EP-A- 0 328 858
- EP-A- 0 687 406

## Description

### 1. Domaine de l'invention

Le domaine de l'invention est celui de la distribution de produit en grains, par exemple les semoirs destinés à l'épandage et/ou l'enfouissement contrôlé de graines ou semis de plantes à cultiver sur une parcelle, par exemple d'une exploitation agricole.

Plus précisément, l'invention concerne un semoir, ainsi que sa tête de répartition et de distribution de graines, permettant de commander sélectivement l'ensemencement de certains rangs et l'absence d'ensemencement d'autres rangs de la parcelle à cultiver, depuis le poste de conduite du semoir.

### 2. Solutions de l'art antérieur inconvénients

Différents types de semoirs, principalement pneumatiques, sont connus de l'art antérieur et tentent d'apporter une solution au problème de l'ensemencement sélectif des rangs d'une parcelle à cultiver.

Le plus souvent, de tels semoirs pneumatiques selon l'art antérieur offrent, outre le mode de fonctionnement permettant de semer tous les rangs de la parcelle à cultiver, l'un des modes d'ensemencement sélectif suivant :
- un mode de fonctionnement dit « tramline » consistant à stopper l'alimentation des graines uniquement vers certains rangs à semer de la parcelle, le plus souvent quatre à six, de façon à maintenir des voies de passage sur la parcelle cultivée qui pourront être empruntées ultérieurement par des engins de traitement notamment, sans risque d'abîmer les rangs semés ;
- un mode de fonctionnement dit « demi-semoir » consistant à diffuser des graines uniquement vers des rangs adjacents à semer et sur une largeur correspondant sensiblement à la moitié de la largeur du semoir, de façon à faciliter l'ensemencement dans des zones de la parcelle à cultiver plus difficilement accessibles, plus étroites ou bien de formes en pointe, par exemple.

De tels semoirs pneumatiques selon l'art antérieur, décrits par exemple dans le document EP-A-0 309 608, comportent généralement un doseur, une partie injection de graines, et une partie répartition des graines vers des éléments semeurs.

Dans ce type de semoir, la distribution des graines vers les éléments semeurs est assurée par une tête de répartition, laquelle reçoit en son centre un flux composé d'air et de graines qui vient s'éclater contre le couvercle de la tête.

Le flux de graines est ainsi dispersé, puis divisé grâce à des sorties situées sur le pourtour de la tête en nombre identique au nombres de rangs à semer.

Pour mettre en oeuvre les modes de fonctionnement « tramline » ou bien « demi semoir », il est nécessaire de pouvoir sélectionner entre les diviseurs de graines devant alimenter les rangs à semer, de ceux qui ne le doivent pas, ces derniers devant permettre en contrepartie, le retour en cuve des graines.

La plupart des solutions techniques de l'art antérieur retenues pour permettre un fonctionnement du semoir en mode « trameline » et/ou en mode « demi semoir » mettent en oeuvre des diviseurs de graines comprenant chacun une entrée, une première sorties vers le rang à semer et une deuxième sortie vers la cuve à graines, ainsi qu'un volet permettant de dévier un flux de graines vers l'une ou l'autre des première et deuxième sorties.

Ces diviseurs de graines, de façon connue, sont empilés les uns à côté des autres autour d'une embase centrale formant conduit de soufflage des graines et surplombés d'un couvercle, l'ensemble constituant une tête de répartition.

### 3. Inconvénients des techniques selon l'art antérieur

Un premier inconvénient des têtes de répartition pour semoir pneumatique connues de l'art antérieur vient du fait qu'elles ne répondent que très partiellement aux besoins de exploitants, par exemple agricoles. En effet, pour bénéficier de l'intérêt des modes de fonctionnement « tramline » et/ou « demi semoir », l'exploitant doit pouvoir commander le passage d'une mode de fonctionnement à l'autre directement depuis le poste de commande du semoir.

Or, aucune des solutions techniques de l'art antérieur ne semble proposer une telle possibilité, sauf à devoir mettre en oeuvre des plusieurs actionneurs automatiques très coûteux.

Un deuxième inconvénient de ces des têtes de répartition pour semoir pneumatique connues de l'art antérieur concernent les risques important de coincement de graines induits le plus souvent par une mauvaise conception des systèmes de déviation du flux de graines mis en oeuvre à l'intérieur des diviseurs de graines utilisés, avec pour conséquence possible, la perturbation du semis sur au moins certains rangs d'une parcelle à ensemencer.

De plus, les diviseurs de graines connus de l'art antérieur utilisent le plus souvent un volet rotatif de déviation du flux de graines, soit vers la sortie alimentant un rang à semer, soit vers la sortie de retour en cuve, dont une partie du levier de commande et ses moyens de fixation et de rotation sont placés dans une zone de la structure interne du diviseur de graines située nécessairement dans le passage du flux de graines, avec pour conséquence possible le coincement des systèmes de commande, créant ainsi une perturbation du semis dont les conséquences sont graves pour le développement des plantes et du rendement.

De plus, un autre inconvénient des têtes de répartition connues de l'art antérieur concerne leur encombrement important incompatible avec des possibilités d'adaptation et/ou d'intégration sur différents types de semoirs, par exemple disposant d'un dispositif de repliage, ou bien d'un coffre, comme mentionné dans la demande de brevet du même Déposant, n° FR 0307209.

Un inconvénient supplémentaire de telles têtes de répartition selon l'art antérieur se produit lorsque ces dernières sont positionnées directement à l'intérieur de la cuve du semoir.
En effet, dans un telle configuration technique, leur encombrement important impliquent la mise en oeuvre complémentaire de carters de protection, souvent très volumineux également, l'ensemble tête de répartition / carter de protection réduisant alors considérablement la capacité de stockage de la cuve du semoir, tout en gênant aussi le remplissage de cette dernière.
Par ailleurs, dans une mise en oeuvre qui s'affranchirait des carters de protection, une telle tête de répartition selon l'art antérieur est d'une part plus sujette à une altération précoce de son aspect et de ses composantes techniques, et d'autre part source de retenues d'un volume important de graines, de par sa forme générale.

De plus, un dernier inconvénient de telles têtes de répartition pour semoir selon l'art antérieur concerne leur temps important et leur complexité de fabrication, qui se traduit par un prix d'achat le plus souvent très élevé des semoirs qu'elles équipent.

### 4. Objectifs de l'invention

L'invention a notamment pour objectif de pallier ces inconvénients de l'art antérieur.

Plus précisément, un objectif de l'invention est de fournir une tête de répartition d'un flux de graines pouvant fonctionner suivant un mode de fonctionnement type « tramline » et un mode de fonctionnement type « demi semoir », ou bien passer d'un mode de fonctionnement à l'autre, par une simple action rapide sur une commande de fonction « tramline » ou sur une commande de fonction « demi semoir », et si besoin en cours de fonctionnement du semoir qu'elle équipe.

Un autre objectif de l'invention est notamment de fournir une nouvelle tête de répartition pour semoir qui garantisse un très bon écoulement du flux de graines, soit vers les rangs de la parcelle à semer, soit vers la cuve du semoir.

Un autre objectif de l'invention est de fournir une telle tête de répartition pour semoir interdisant tout coincement, bourrage ou encore casse des graines.

Encore un autre objectif de l'invention est de fournir une telle tête de répartition à l'encombrement sensiblement réduit, mais comprenant des sections de passages de graines plus importantes, comparativement aux têtes de répartition connues de l'art antérieur, de façon à permettre une adaptabilité sur différents types de semoirs du marché.

Une dernier objectif de l'invention consiste à fournir une telle tête de semoir qui soit simple et peu coûteuse à fabriquer, ainsi qu'un semoir équipé d'une telle tête de répartition.

### 5. Caractéristiques essentielles de l'invention

Ces objectifs, ainsi que d'autres qui apparaîtront par la suite, sont atteints à l'aide d'une tête (200) de distribution d'un volume de graines contenu dans une cuve d'un semoir pneumatique comprenant des moyens de répartition du volume de graines suivant une pluralité de rangs à ensemencer d'une parcelle, la tête (200) de distribution autorisant au moins un premier mode de fonctionnement dans lequel au moins un des rangs de la parcelle n'est pas ensemencé, et au moins un deuxième mode de fonctionnement dans lequel seul un sous-ensemble de rangs adjacents correspondant sensiblement à une demi largeur du semoir sont ensemencés parmi la pluralité de rangs à ensemencer.

La tête (200) de répartition est alimentée par un conduit (63) de soufflage pneumatique des graines contenues dans la cuve.

Avantageusement, les moyens de répartition comprennent au moins un couvercle de forme prédéterminée de répartition d'un flux de graines homogène en densité à l'intérieur d'un ensemble de diviseurs (10) de graines en nombre au moins égal aux rangs à ensemencer, chacun des diviseurs (10) de graines comprenant :
- des moyens (100) de passage d'une partie du flux (100) de graines provenant d'au moins un orifice (64) formé entre le couvercle (201) d'alimentation et le rebord (62) du conduit (63) de soufflage de graines;
- des moyens (102) sélectifs de déviation d'une partie du flux (101) de graines en sortie des moyens (100) de passage, soit vers une sortie (103) d'alimentation en graines d'au moins un des rangs à ensemencer, soit vers une sortie (104) de retour en cuve des graines, suivant que le premier ou le deuxième mode de fonctionnement est sélectionné ;
- des moyens (105, 106, 107) de commande par transfert de mouvement des moyens (102) sélectifs de déviation, déportés au moins en partie au-dessus et en dessous de la structure (108) du diviseur (10) de graines.

La tête (200) de distribution selon l'invention comprend des moyens (202) d'actionnement des moyens (105, 106, 107) de commande, par la mise en rotation d'au moins une première couronne (203) mobile d'activation du premier mode de fonctionnement et/ou par mise en rotation d'au moins une deuxième couronne (300) mobile d'activation du deuxième mode de fonctionnement.

Il est bien entendu que l'invention peut être étendue à la mise en oeuvre d'autres modes de fonctionnement, par l'ajout d'autres couronnes d'actionnement dont la mise en rotation permettrait d'actionner un mode de fonctionnement supplémentaire du semoir.

Par exemple, un autre mode de fonctionnement peut consister à ensemencer un rang sur deux, ou bien un rang sur trois, etc., en fonction du type de plantes et du développement de ces dernières, par exemple. Tout autre mode de fonctionnement permettant de sélectionner uniquement certains rangs à semer de la parcelle peuvent être aisément mis en oeuvre au moyen de la tête de répartition et d'un semoir équipé d'une telle tête, selon l'invention.

De façon avantageuse, les moyens (202) d'actionnement sont solidarisés en au moins une première partie (204) avec le couvercle (201) de répartition du flux (101) de graines et en au moins une deuxième partie (205) avec l'une au moins des première (204) ou deuxième (300) couronnes d'activation.

De façon également préférentielle, les moyens (102) sélectifs de déviation du flux (101) de graines sont montés mobiles en rotation (109) autour d'un axe (110) de rotation positionné dans une zone de la structure (108) interne du diviseur (202) de graines sensiblement située à l'intersection de la sortie (103) d'alimentation en graines et de la sortie (104) de retour en cuve des graines. En outre, au moins une partie (111) des moyens (102) sélectifs de déviation forme moyens de protection et d'étanchéité de l'axe (110) de rotation contre le flux (101) de graines traversant les moyens (100) de passage.

Préférentiellement, les moyens (105, 106, 107) de commande de chacun desdits diviseurs (10) de graines comprennent :
- une pièce (105) de commande réversible montée mobile en rotation autour d'un premier axe (112) de rotation positionné sur le dessus de la structure (108) du diviseur (10) de graines, et comprenant un premier bras (40) de levier de mise en rotation de la pièce (105) par collaboration avec la première couronne (203) mobile d'actionnement et un deuxième bras (41) de levier de mise en rotation de la pièce (105) par collaboration avec la deuxième couronne (300) mobile d'actionnement ;
- un levier (106) de transfert de mouvement monté mobile en rotation autour d'un deuxième axe (113) de rotation positionné sur le dessus de la structure (108) du diviseur (10) de graines, dans un plan sensiblement perpendiculaire à celui du premier axe (112) de rotation, le levier (106) étant déporté sur un côté de la structure (108) du diviseur (10) de graines le long duquel il est monté affleurant, et le levier (106) collaborant en une première (114) de ses extrémités (114, 115) avec un deuxième bras (41) de levier de la pièce (105) de commande ;
- un bras (107) d'actionnement s'articulant en sa première (116) extrémité avec la deuxième extrémité (115) du levier (106) de transfert et en sa deuxième extrémité (117) avec les moyens (102) sélectifs de déviations, une partie au moins du bras (107) d'actionnement traversant une fenêtre (61) formée dans la structure (108) du diviseur (10) de graines et isolée du flux de graines par les moyens (102) sélectifs de déviation.

Ainsi, les moyens (102) sélectifs de déviation viennent obturer la sortie (103) d'alimentation en graines ou la sortie (104) de retour en cuve par transferts de mouvement de la pièces (105) de commande initié par la mise en rotation de l'une au moins des première (203) ou deuxième (300) couronnes mobiles d'activation du premier ou deuxième mode de fonctionnement respectivement, au bras (107) d'actionnement, par l'intermédiaire du levier (106) de transfert de mouvement.

De façon avantageuse, les premier (40) et deuxième (41) bras de levier de la pièce (105) de commande sont formés dans le prolongement d'un ressort (118) mobile en rotation autour du premier axe (112) de rotation positionné sur le dessus de la structure (108) du diviseur (10) de graines, les premier (40) et deuxième (41) bras de levier étant de longueurs respectives différentes, de façon à permettre un faible débattement du ressort (118) et à maintenir ce dernier dans l'encombrement (42) latéral du diviseur (10) de graines.

De façon préférentielle, la position du levier (106) de transfert de mouvement est décalée d'une distance (43) prédéterminée relativement à la position de l'axe (110) de rotation des moyens (102) sélectifs de déviation, de façon à dégager complètement les parties (44, 45) latérales du diviseur (10) de graines.

De façon avantageuse, la tête (200) de distribution selon l'invention comprend une pluralité de diviseurs (10) de graines montés affleurant deux à deux sur l'ensemble de sa circonférence (206).

Une telle approche nouvelle et inventive permet ainsi de réduire sensiblement la taille de la tête de répartition, et donc d'envisager certains semoirs pneumatiques dont la tête de répartition est directement intégrée à l'intérieur de la trémie ou bien de la cuve à graines.

De façon également avantageuse, chacun des diviseurs (10) de graines comprend des moyens (46) uniques de fixation rapide par encliquetage sur le rebord (62) supérieur du conduit (63) de soufflage pneumatique, tels qu'une fois encliquetés, les moyens (100) de passage d'une partie dudit flux (101) de graines épousent respectivement l'un au moins des orifices (64) de sortie des graines formé entre le couvercle (201) d'alimentation et le rebord (62) supérieur du conduit (63) de soufflage pneumatique.

Préférentiellement, le couvercle (201) de répartition homogène en densité du flux (101) de graines vers chacun des diviseurs (10) de graines, possède une forme comportant en sa partie centrale un disque (71) sensiblement plan d'éclatement des graines soufflées de diamètre sensiblement égal au diamètre du conduit (63) de soufflage pneumatique au dessus duquel il est positionné à une distance prédéterminée. En outre, la forme est complétée à la circonférence du disque (71) d'éclatement d'une demi couronne (72) de concavité orientée dans le prolongement du flux (101) de graines soufflées.

De façon préférentielle, les moyens sélectifs de déviation sont du type volet mobile en rotation d'obturation de la sortie d'alimentation en graines ou d'obturation de la sortie de retour en cuve du diviseur de graines, suivant que ce dernier doit laisser passer les graines pour semer un rang de la parcelle ou non.

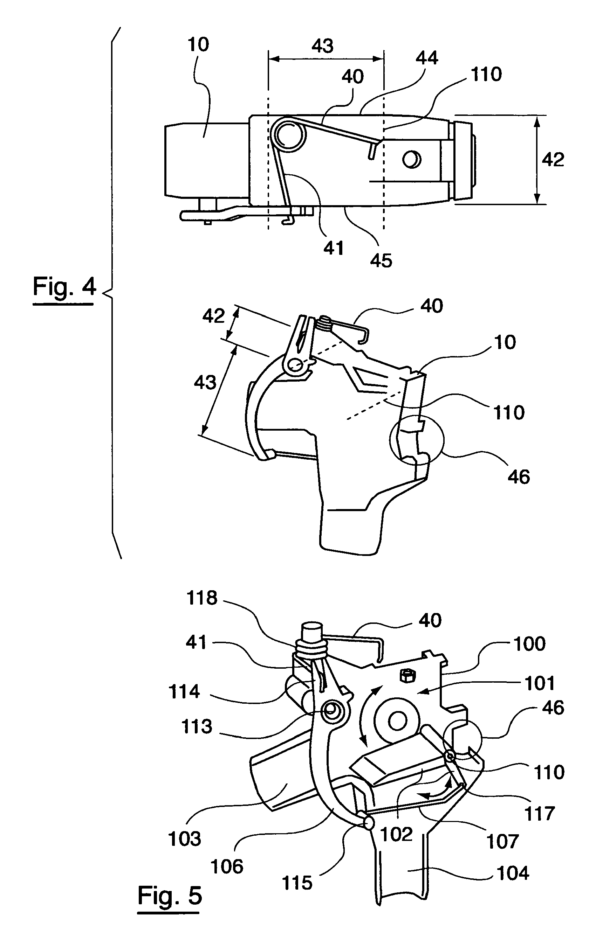

Comme illustré sur la figure 5, un tel volet peut être constituée de partie inclinées l'une par rapport à l'autre, de façon à pouvoir obturer simultanément la sortie (103) d'alimentation d'un rang à semer et la sortie (104) de retour en cuve.

Avantageusement, la sortie (104) de retour de graines en cuve est dirigée sensiblement verticalement sous le diviseur (10) de graines, en amont de moyens de collecte des graines positionnés sous la tête (200) de répartition. De tels moyens de collecte peuvent prendre la forme notamment, mais non exclusivement, de tuyaux ou de réservoir(s) tampon destinés à recevoir les graines avant que celles-ci ne soient redéversées dans la cuve du semoir.

L'invention concerne également et de façon avantageuse un semoir pneumatique, par exemple du type semoir agricole, comprenant une tête (200) de distribution d'un volume de graines contenu dans une cuve, la tête (200) comprenant des moyens de répartition du volume de graines suivant une pluralité de rangs à ensemencer d'une parcelle.

Selon l'invention, la tête (200) comprenant au moins un premier mode de fonctionnement dans lequel au moins un des rangs de la parcelle n'est pas ensemencé, et au moins un deuxième mode de fonctionnement dans lequel seul un sous-ensemble de rangs adjacents correspondant sensiblement à une demi largeur du semoir sont ensemencés parmi la pluralité de rangs à ensemencer. La tête (200) de répartition est alimentée par un conduit (63) de soufflage pneumatique des graines contenues dans la cuve.

Préférentiellement, les moyens de répartition de la tête de distribution comprennent au moins un couvercle (201) de forme prédéterminée de répartition d'un flux (101) de graines homogène en densité vers un ensemble de diviseurs (10) de graines en nombre au moins égal aux rangs à ensemencer, chacun des diviseurs (10) de graines comprenant :
- des moyens (100) de passage d'une partie du flux (100) de graines provenant d'au moins un orifice (64) formé entre le couvercle (201) d'alimentation et le rebord (62) du conduit (63) de soufflage de graines;
- des moyens (102) sélectifs de déviation d'une partie du flux (101) de graines en sortie des moyens (100) de passage, soit vers une sortie (103) d'alimentation en graines d'au moins un des rangs à ensemencer, soit vers une sortie (104) de retour en cuve des graines, suivant que le premier ou que le deuxième mode de fonctionnement est sélectionné ;
- des moyens (105, 106, 107) de commande par transfert de mouvement des moyens (102) sélectifs de déviation, déportés au moins en partie au-dessus et en dessous de la structure (108) du diviseur (10) de graines.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente la structure interne d'un diviseur de graines équipant une tête de répartition selon l'invention, ainsi que la cinématique du mouvement des moyens de déviation d'un flux de graines ;

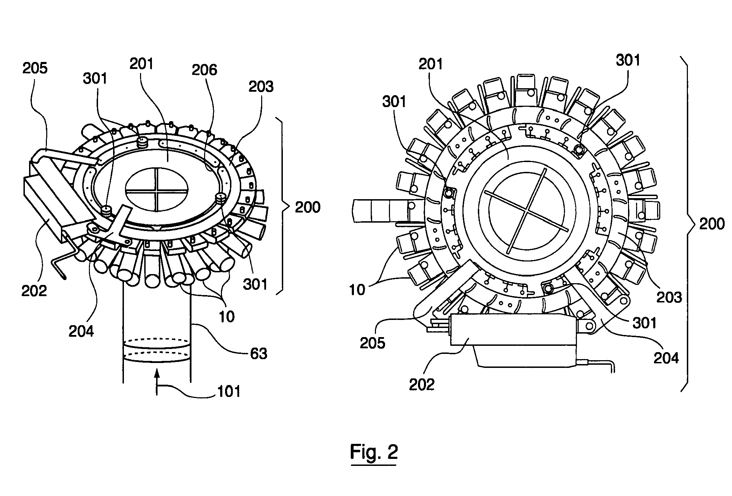

- la figure 2 illustre une tête de répartition pour semoir selon l'invention ;

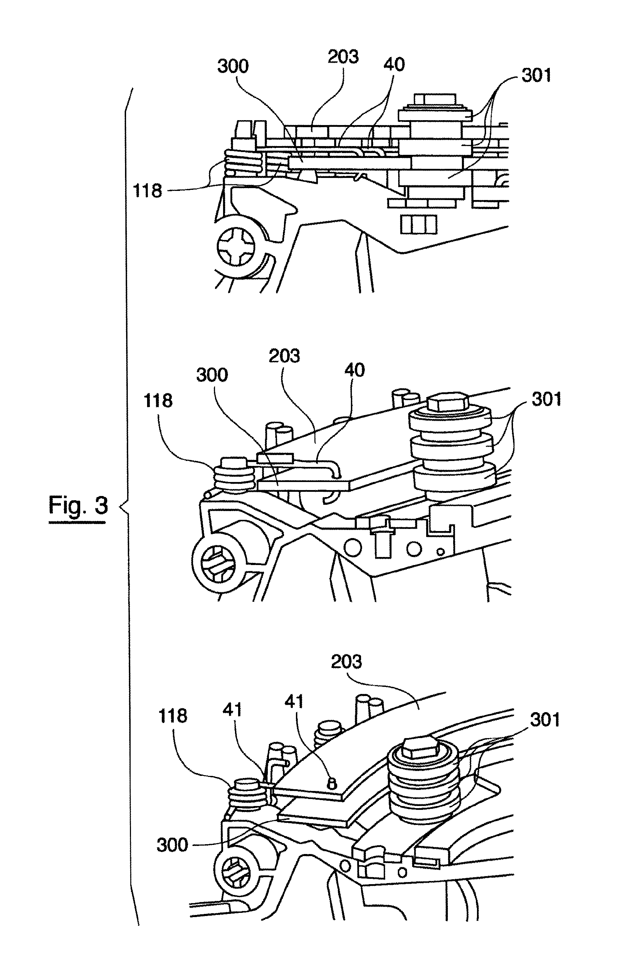

- la figure 3 donne une illustration de l'assemblage et de la collaboration entre les couronnes d'actionnement des deux modes de fonctionnement « tramline » et « demi semoir » avec les bras de levier de la pièce de commande d'un diviseur de graines selon l'invention ;
- la figure 4 présente respectivement une vue de dessus et une vue de profile d'un diviseur de graines selon l'invention ;
- la figure 5 présente une variante possible en deux parties inclinées l'une relativement à l'autre, de la forme des moyens de déviation d'un diviseur de graines selon l'invention ;
- la figure 6 illustre les moyens uniques de fixation par encliquetage d'un diviseur de graines, sur le rebord d'un conduit de soufflage de graines ;

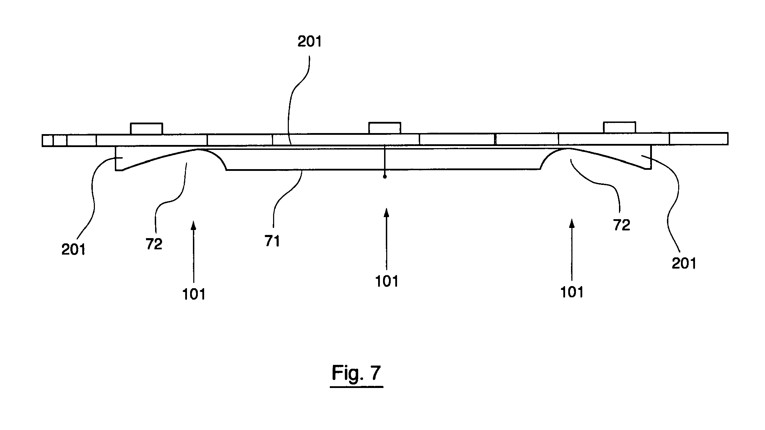

- la figure 7 donne une vue de profile d'un couvercle de tête de répartition de forme spécifique, selon l'invention.

### 7. Description détaillée d'un mode de réalisation de invention

La présente invention concerne donc la réalisation d'une tête de répartition pour semoir, à la fois nouvelle et inventive, en ce qu'elle intègre au moins deux mode de fonctionnement supplémentaire au mode de fonctionnement normal, du type « tramline » et « demi semoir », tout en étant de conception, de fabrication et d'utilisation également relativement simples, et de plus, à l'encombrement réduit répondant aux nouvelles exigences des agriculteurs.

Une spécificité de la tête de répartition pour semoir selon l'invention réside notamment dans le fait que les moyens 105, 106 et 107 de commande des moyens 102 de déviation d'un diviseur de graines sont actionnés sur le dessus de la tête (200) de répartition par un transfert de mouvement entre une pièce (105) de commande et un bras (107) d'actionnement, par l'intermédiaire d'un levier (106) de transfert de mouvement monté affleurant sur un côté de la structure (108) et en décalage suffisant par rapport à la position des moyens de déviation, de façon à libérer les deux faces latérales du diviseur.

Les moyens (202) d'actionnement sont solidarisés en au moins une première partie (204) avec ledit couvercle (201) de répartition dudit flux (101) de graines et en au moins une deuxième partie (205) avec l'une au moins desdites première (204) ou deuxième (300) couronnes d'activation, par exemple sur la couronne (203) du mode de fonctionnement « tramline ».

Sous l'effet de l'actionneur (202), la couronne (203) tourne sur son axe et fait pivoter une série de ressorts (118) en même temps.

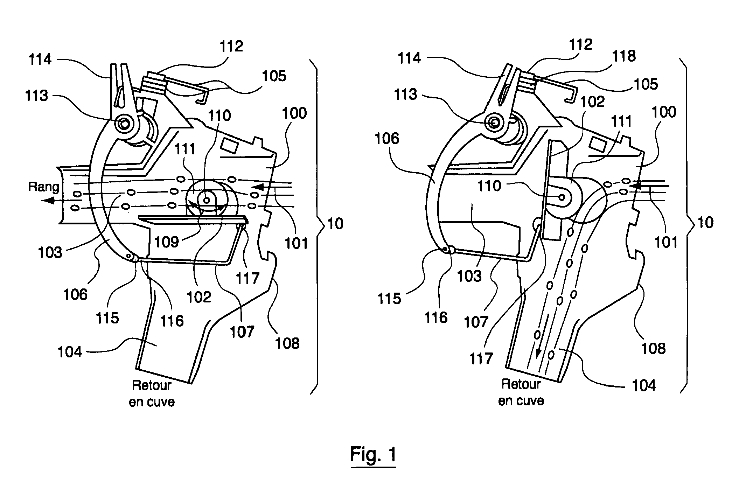

Les ressorts (118) situés sur le dessus de chacun des diviseurs (10) concernés par le mode de fonctionnement « tramline » font alors pivoter à leur tour le levier (106) de transfert de mouvement, ce dernier faisant à son tour pivoter le volet (102) des moyens de déviation, grâce au bras (107) d'actionnement pouvant se présenter sous la forme d'une bielle, comme illustré sur la figure 1.

La tête (200) de répartitions selon l'invention embarque une couronne (203) d'actionnement de la fonction « tramline » et une couronne (300) d'actionnement de la fonction « demi semoir », les deux couronnes (203) et (300) étant disposées sur le dessus du couvercle (201) de la tête (200) de semoir, l'une au dessus de l'autre dans des plans sensiblement parallèles et espacées d'une distance prédéterminée maintenue par des espaceurs (301).

Un simple retournement du ressort (118) permet de passer du mode de fonctionnement « Tramline » au mode de fonctionnement « demi semoir ».

Le transfert de mouvement du haut vers le bas des moyens (102) de déviation permet de réduire l'encombrement (43) du ressort (118), comme illustré au travers la figure 4.
En effet, la position du levier (106) de transfert de mouvement est volontairement décalée par rapport à l'axe (110) de rotation du volet des moyens de déviation du flux (101) de graines, ce qui offre pour principale avantage de dégager complètement les faces latérales de chacun des diviseurs (10) de graines, et donc, des pouvoir les rapprocher d'une distance pratiquement nulle en les fixant sur le rebord (62) du conduit (63) de soufflage des graines, du semoir.

De plus, les bras (40) et (41) de levier situés dans le prolongement des spires du ressort (118) sont volontairement d'une longueur différente pour permettre un faible débattement du ressort (118), ce qui offre pour avantage supplémentaire de maintenir le ressort (118) dans l'encombrement (42) latéral du diviseur (10) de graines qu'il équipe, comme illustré sur la figure 4. Une telle mise en oeuvre technique basée sur le déport de la commande d'actionnement des moyens de déviation du flux de graines contribue ainsi à la réduction sensible de l'encombrement globale de la tête (200) de répartition pour semoir, selon l'invention.

De plus, il est à noter de façon également avantageuse, que la géométrie donnée aux moyens (105, 106, 107) de commande des moyens (102) de déviation permet de respecter l'écoulement des graines, tout comme l'augmentation des sections de passage des graines au niveau des sorties d'alimentation et de retour en cuve, sans qu'aucun élément mécanique ne vienne se placer dans le flux de graine en projection et donc, sans qu'aucun de ces éléments techniques ne puissent compromettre l'intégrité physique des graines.

De plus, pour garantir le maintien d'une même densité de graines dans les sortie d'alimentation en graines des rangs à semer, même lorsqu'un des moyens de déviation d'un diviseur (10) de graines de la tête de répartition viendrait à se coincer de façon intempestive, la souplesse des ressorts (118) est choisie de telle sorte que ces derniers ne puissent pas bloquer la rotation de la couronne d'actionnement d'un des deux modes de fonctionnement.

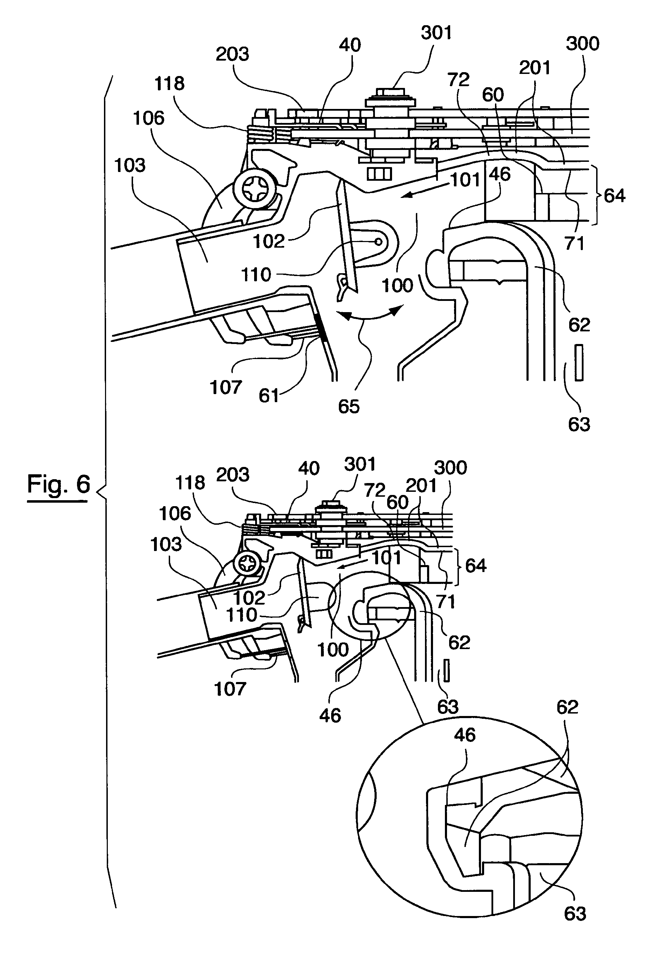

Dans la continuité de l'argument technique précité, et comme illustré sur la figure 6, les sections de passage associées à la géométrie du volet (102) permet d'éviter tout coincement de graines à l'intérieur du diviseur (10) de graines.

En effet, le sens de rotation (65) du volet (102) (de l'ouverture à la fermeture), permet de repousser les graines devant lui pour empêcher tout coincement.

De plus, la forme de la structure interne du diviseur (10) de graines est conçue spécifiquement pour favoriser l'évacuation et l'écoulement des graines soit vers la sortie (103) d'alimentation des rangs à semer, soit vers la sortie (104) de retour en cuve, suivant la position donnée au volet (102).

A l'inverse, c'est-à-dire dans le sens de la fermeture à l'ouverture, le flux (101) constitué d'un mélange air/graines aide le volet (102) à revenir dans sa position sa position initiale (figure 1).

De façon avantageuse, la sortie (104) de retour en cuve est positionnée sensiblement à 90° de la sortie (103) d'alimentation des rangs à semer, ce qui permet d'une part d'équilibrer les pertes de charges au niveau des autres diviseurs (10) de graines de la tête de répartition, lors du passage en mode de fonctionnement « Tramline » et, d'autre part, de favoriser la collecte des graines sous la tête de répartition.

De par la mise en oeuvre de cette nouvelle tête de répartition pour semoir, selon l'invention, l'utilisation de cette dernière s'en trouve sensiblement simplifiée pour l'exploitant, puisque un seul actionneur (202) suffit désormais et comparativement aux solutions connues de l'art antérieur, pour manipuler les volets (102) suivant le mode de fonctionnement « Tramline » ou « demi semoir ».

De plus, la commande sur le dessus permet un accès facile à l'actionneur (202), ainsi qu'aux ressorts (118), ce qui simplifie grandement la sélection des rangs de la parcelle qui bénéficieront du mode de fonctionnement « tramline », et des rangs qui bénéficieront du mode de fonctionnement « demi semoir ». Cette sélection s'effectue avantageusement au moyen du même ressort (118) équipant chacun des diviseurs (10) de graines, qu'il suffit de retourner pour passer d'un fonctionnement « Tramline » à un fonctionnement « demi semoir » au niveau de chaque diviseur de graines.

En outre, le principe de fixation par encliquetage de chacun des diviseurs de graines, sur le rebord (62) du conduit (63) de soufflage des graines du semoir, permet un montage rapide avec un nombre de pièce et de visserie réduit, ce qui diminue les coûts de fabrication et facilite en outre sensiblement la maintenance de l'ensemble, un diviseur de graine défectueux pouvant désormais être directement changé ou réparé plus rapidement, et donc à moindre coût pour l'exploitant.

D'autres formes de volets (102) de déviation peuvent bien entendu être utilisés, comme illustré sur la figure 5, suivant la forme de la structure interne et/ou l'encombrement donnée à celle-ci, pour un diviseur de graines.

En d'autres termes et de façon résumé, l'invention définit une nouvelle tête de répartition pour semoir à la fois nouvelle et inventive, en ce qu'elle permet :
- de réduire sensiblement l'encombrement de ladite tête de répartition de part :
   ○ le transfert du mouvement de commande des moyens de déviation du dessus pour actionner un volet (102) par-dessous ;
   ○ le déport du levier (106) de transfert de mouvement par rapport à l'axe (110) de rotation du volet (102) ;
   ○ la différence de longueur des bras de levier (40) et (41) prolongeant les ressorts (118) ;
- de favoriser la sécurité d'écoulement des graines, le respect de la répartition au sol en densité de graines de part :
   ○ l'absence d'aspérité, d'éléments mécaniques placés dans le flux de graines ;
   ○ le ressort (118) d'une souplesse permettant d'éviter tout blocage de l'ensemble de la tête de répartition, suite à d'éventuels coincement d'un corps étranger ou de graines à l'intérieur d'un diviseur de graines ;
   ○ la géométrie et la forme du volet (102), lesquels permettent d'éviter tout risque de coincement de graines préjudiciable pour le bon déroulement du semis ;
   ○ l'influence réduite du retour en cuve sur la répartition en graine dans les sorties (103) d'alimentation en semi ;
   ○ la collecte des graines regroupée sous la tête de répartition ;
- de simplifier sensiblement l'utilisation du semoir par l'exploitant de part :
   ○ la facilité d'accès à un unique actionneur (202) ;
   ○ la possibilité de pouvoir passer d'un mode de fonctionnement « tramline » à un mode de fonctionnement « demi semoir » extrêmement simplement, par un simple retournement du ressort (118) d'un diviseur de graines ;
- une fixation par encliquetage simple, rapide, efficace et économique de chacun des diviseurs de graines sur le bord (62) du conduit (63) de soufflage des graines, ce qui simplifie énormément l'intervention et la maintenance pour l'exploitant lui-même, tout en diminuant les coûts de fabrication de la tête de répartition et du semoir.

## Revendications

1. Tête (200) de distribution d'un volume de graines contenu dans une cuve d'un semoir pneumatique comprenant des moyens de répartition dudit volume de graines suivant une pluralité de rangs à ensemencer d'une parcelle, ladite tête (200) de distribution autorisant au moins un premier mode de fonctionnement dans lequel au moins un desdits rangs de ladite parcelle n'est pas ensemencé, et au moins un deuxième mode de fonctionnement dans lequel seul un sous-ensemble de rangs adjacents correspondant sensiblement à une demi largeur dudit semoir sont ensemencés parmi ladite pluralité de rangs à ensemencer,
ladite tête (200) de répartition étant alimentée par un conduit (63) de soufflage pneumatique desdites graines contenues dans ladite cuve,
**caractérisé en ce que** lesdits moyens de répartition comprennent au moins un couvercle de forme prédéterminée de répartition d'un flux de graines homogène en densité à l'intérieur d'un ensemble de diviseurs (10) de graines en nombre au moins égal auxdits rangs à ensemencer, chacun desdits diviseurs (10) de graines comprenant :
- des moyens (100) de passage d'une partie dudit flux (100) de graines provenant d'au moins un orifice (64) formé entre ledit couvercle (201) d'alimentation et le rebord (62) dudit conduit (63) de soufflage de graines;
- des moyens (102) sélectifs de déviation d'une partie dudit flux (101) de graines en sortie desdits moyens (100) de passage, soit vers une sortie (103) d'alimentation en graines d'au moins un desdits rangs à ensemencer, soit vers une sortie (104) de retour en cuve desdites graines, suivant que ledit premier ou ledit deuxième mode de fonctionnement est sélectionné ;
- des moyens (105, 106, 107) de commande par transfert de mouvement desdits moyens (102) sélectifs de déviation, déportés au moins en partie au-dessus et en dessous de la structure (108) dudit diviseur (10) de graines, lesdits moyens de commande étant actionnés par des moyens (202) d'actionnement desdits moyens (105, 106, 107) de commande, par la mise en rotation d'au moins une première couronne (203) mobile d'activation dudit premier mode de fonctionnement et/ou par mise en rotation d'au moins une deuxième couronne (300) mobile d'activation dudit deuxième mode de fonctionnement.

2. Tête (200) de distribution selon la revendication 1, **caractérisé en ce que** lesdits moyens (202) d'actionnement sont solidarisés en au moins une première partie (204) avec ledit couvercle (201) de répartition dudit flux (101) de graines et en au moins une deuxième partie (205) avec l'une au moins desdites première (204) ou deuxième (300) couronnes d'activation.

3. Tête (200) de distribution selon l'une quelconque des revendications 1 et 2, **caractérisé en ce que** lesdits moyens (102) sélectifs de déviation dudit flux (101) de graines sont montés mobiles en rotation (109) autour d'un axe (110) de rotation positionné dans une zone de la structure (108) interne dudit diviseur (202) de graines sensiblement située à l'intersection de ladite sortie (103) d'alimentation en graines et de ladite sortie (104) de retour en cuve desdites graines,
et **en ce que** au moins une partie (111) desdits moyens (102) sélectifs de déviation forme moyens de protection et d'étanchéité dudit axe (110) de rotation contre le flux (101) de graines traversant lesdits moyens (100) de passage.

4. Tête (200) de distribution selon l'une quelconque des revendications 2 et 3, **caractérisé en ce que** lesdits moyens (105, 106, 107) de commande de chacun desdits diviseurs (10) de graines comprennent :
- une pièce (105) de commande réversible montée mobile en rotation autour d'un premier axe (112) de rotation positionné sur le dessus de ladite structure (108) dudit diviseur (10) de graines, et comprenant un premier bras (40) de levier de mise en rotation de ladite pièce (105) par collaboration avec ladite première couronne (203) mobile d'actionnement, lorsque ladite tête (200) est dans ledit premier mode de fonctionnement, et un deuxième bras (41) de levier de mise en rotation de ladite pièce (105) par collaboration avec ladite deuxième couronne (300) mobile d'actionnement, lorsque ladite tête (200) est dans ledit deuxième mode de fonctionnement, le passage dudit premier audit deuxième mode de fonctionnement ou le passage dudit deuxième audit premier mode de fonctionnement s'effectuant pas simple retournement de ladite pièce (105) de commande sur ledit premier axe (112) de rotation ;
- un levier (106) de transfert de mouvement monté mobile en rotation autour d'un deuxième axe (113) de rotation positionné sur le dessus de la structure (108) dudit diviseur (10) de graines, dans un plan sensiblement perpendiculaire à celui dudit premier axe (112) de rotation, ledit levier (106) étant déporté sur un côté de ladite structure (108) dudit diviseur (10) de graines le long duquel il est monté affleurant, et ledit levier (106) collaborant en une première (114) de ses extrémités (114, 115) avec un deuxième bras (41) de levier de ladite pièce (105) de commande ;
- un bras (107) d'actionnement s'articulant en sa première (116) extrémité avec la deuxième extrémité (115) dudit levier (106) de transfert et en sa deuxième extrémité (117) avec lesdits moyens (102) sélectifs de déviations, une partie au moins dudit bras (107) d'actionnement traversant une fenêtre (61) formée dans ladite structure (108) dudit diviseur (10) de graines et isolée dudit flux de graines par lesdits moyens (102) sélectifs de déviation ;
de façon que lesdits moyens (102) sélectifs de déviation viennent obturer ladite sortie (103) d'alimentation en graines ou ladite sortie (104) de retour en cuve par transferts de mouvement de ladite pièces (105) de commande initié par la mise en rotation de l'une au moins desdites première (203) ou deuxième (300) couronnes mobiles d'activation dudit premier ou deuxième mode de fonctionnement respectivement, audit bras (107) d'actionnement, par l'intermédiaire dudit levier (106) de transfert de mouvement.

5. Tête (200) de distribution selon la revendication 4, **caractérisé en ce que** lesdits premier (40) et deuxième (41) bras de levier de ladite pièce (105) de commande sont formés dans le prolongement d'un ressort (118) mobile en rotation autour dudit premier axe (112) de rotation positionné sur le dessus de ladite structure (108) dudit diviseur (10) de graines, lesdits premier (40) et deuxième (41) bras de levier étant de longueurs respectives différentes, de façon à permettre un faible débattement dudit ressort (118) et à maintenir ce dernier dans l'encombrement (42) latéral dudit diviseur (10) de graines.

6. Tête (200) de distribution selon l'une quelconque des revendications 4 et 5, **caractérisé en ce que** la position dudit levier (106) de transfert de mouvement est décalée d'une distance (43) prédéterminée relativement à la position dudit axe (110) de rotation des desdits moyens (102) sélectifs de déviation, de façon à dégager complètement les parties (44, 45) latérales dudit diviseur (10) de graines.

7. Tête (200) de distribution selon l'une quelconque des revendications 1 à 6, **caractérisé en ce qu'**elle comprend une pluralité de diviseurs (10) de graines montés affleurant deux à deux sur l'ensemble de sa circonférence (206).

8. Tête (200) de distribution selon l'une quelconque des revendications 1 à 7, **caractérisé en ce que** chacun desdits diviseurs (10) de graines comprend des moyens (46) uniques de fixation rapide par encliquetage sur le rebord (62) supérieur dudit conduit (63) de soufflage pneumatique, tels qu'une fois encliquetés, lesdits moyens (100) de passage d'une partie dudit flux (101) de graines épousent respectivement ledit au moins un orifice (64) de sortie desdites graines formé entre ledit couvercle (201) d'alimentation et ledit rebord (62) supérieur dudit conduit (63) de soufflage pneumatique.

9. Tête (200) de distribution selon l'une quelconque des revendications 1 à 8, **caractérisé en ce que** ledit couvercle (201) de répartition homogène en densité dudit flux (101) de graines vers chacun desdits diviseurs (10) de graines, possède une forme comportant en sa partie centrale un disque (71) sensiblement plan d'éclatement desdits graines soufflées de diamètre sensiblement égal au diamètre dudit conduit (63) de soufflage pneumatique au dessus duquel il est positionné à une distance prédéterminée,
ladite forme étant complétée à la circonférence dudit disque (71) d'éclatement d'une demi couronne (72) de concavité orientée dans le prolongement du flux (101) de graines soufflées.

10. Tête (200) de distribution selon l'une quelconque des revendications 1 à 9, **caractérisé en ce que** lesdits moyens sélectifs de déviation sont du type volet mobile en rotation d'obturation de ladite sortie d'alimentation en graines ou d'obturation de ladite sortie de retour en cuve dudit diviseur de graines, suivant que ce dernier doit laisser passer les graines pour semer un rang de ladite parcelle ou non.

11. Tête (200) de distribution selon l'une quelconque des revendications 1 à 9, **caractérisé en ce** ladite sortie (104) de retour de graines en cuve est dirigée sensiblement verticalement sous ledit diviseur (10) de graines, en amont de moyens de collecte desdites graines positionnés sous ladite tête (200) de répartition.

12. Semoir pneumatique, par exemple du type semoir agricole, comprenant une tête (200) de distribution d'un volume de graines contenu dans une cuve, ladite tête (200) comprenant des moyens de répartition dudit volume de graines suivant une pluralité de rangs à ensemencer d'une parcelle,
ladite tête (200) comprenant au moins un premier mode de fonctionnement dans lequel au moins un desdits rangs de ladite parcelle n'est pas ensemencé, et au moins un deuxième mode de fonctionnement dans lequel seul un sous-ensemble de rangs adjacents correspondant sensiblement à une demi largeur dudit semoir sont ensemencés parmi ladite pluralité de rangs à ensemencer, et
ladite tête (200) de répartition étant alimentée par un conduit (63) de soufflage pneumatique desdites graines contenues dans la cuve,
**caractérisé en ce que** lesdits moyens de répartition comprennent au moins un couvercle (201) de forme prédéterminée de répartition d'un flux (101) de graines homogène en densité vers un ensemble de diviseurs (10) de graines en nombre au moins égal auxdits rangs à ensemencer, chacun desdits diviseurs (10) de graines comprenant :
- des moyens (100) de passage d'une partie dudit flux (100) de graines provenant d'au moins un orifice (64) formé entre ledit couvercle (201) d'alimentation et le rebord (62) dudit conduit (63) de soufflage de graines;
- des moyens (102) sélectifs de déviation d'une partie dudit flux (101) de graines en sortie desdits moyens (100) de passage, soit vers une sortie (103) d'alimentation en graines d'au moins un desdits rangs à ensemencer, soit vers une sortie (104) de retour en cuve desdites graines, suivant que ledit premier ou ledit deuxième mode de fonctionnement est sélectionné ;
- des moyens (105, 106, 107) de commande par transfert de mouvement desdits moyens (102) sélectifs de déviation, déportés au moins en partie au-dessus et en dessous de la structure (108) dudit diviseur (10) de graines, lesdits moyens de commande étant actionnés par des moyens (202) d'actionnement desdits moyens (105, 106, 107) de commande, par la mise en rotation d'au moins une première couronne (203) mobile d'activation dudit premier mode de fonctionnement et/ou par mise en rotation d'au moins une deuxième couronne (300) mobile d'activation dudit deuxième mode de fonctionnement.

## Claims

1. Dispensing head (200) for a volume of seeds contained in a trough of a pneumatic seeding implement comprising means for distributing said volume of seeds along a plurality of rows to be sown of a plot of land, said dispensing head (200) permitting at least one first operating mode in which at least one of said rows of said plot of land is not sown, and at least one second operating mode in which only one subset of adjacent rows, which correspond substantially to half the width of said seeding implement, are sown from said plurality of rows to be sown,
said distributing head (200) being supplied by a pneumatic tube (63) for blowing said seeds contained in said trough,
**characterised in that** said distributing means comprise at least one lid of pre-determined shape for distributing a flow of seeds, which is of homogeneous density, to the interior of a group of seed dividers (10) in a number at least equal to said rows to be sown, each of said seed dividers (10) comprising:
- means (100) for passing a portion of said flow (100) of seeds originating from at least one orifice (64) formed between said lid (201) for supplying seeds and the edge (62) of said tube (63) for blowing seeds;
- selective means (102) for deflecting a portion of said flow (101) of seeds discharged from said passage means (100), either to an outlet (103) for supplying at least one of said rows to be sown with seeds or to an outlet (104) for returning said seeds to the trough, according to whether said first operating mode or said second operating mode is selected;
- control means (105, 106, 107) by transferring the movement of said selective deflecting means (102), displaced at least partially above and below the structure (108) of said seed divider (10), said control means being actuated by means (202) for actuating said control means (105, 106, 107), by rotating at least one first mobile actuating ring (203) of said first operating mode and/or by rotating at least one second mobile actuating ring (300) of said second operating mode.

2. Dispensing head (200) according to Claim 1, **characterised in that** said actuating means (202) are fixed in at least one first part (204) to said lid (201) for distributing said flow (101) of seeds and in at least one second part (205) to at least one of said first (204) or second (300) actuating rings.

3. Dispensing head (200) according to any one of Claims 1 to 2, **characterised in that** said selective means (102) for deflecting said flow (101) of seeds are mounted mobile in rotation (109) about an axis (110) of rotation located in an area of the internal structure (108) of said seed divider (202), substantially located at the intersection of said outlet (103) for supplying seeds and said outlet (104) for returning said seeds to the trough,
and **in that** at least one part (111) of said selective deflecting means (102) forms means for protecting and sealing said axis of rotation (110) against the flow (101) of seeds passing through said passage means (100).

4. Dispensing head (200) according to any one of Claims 2 and 3, **characterised in that** said control means (105, 106, 107) of each of said seed dividers (10) comprise:
- a reversible control part (105) mounted mobile in rotation about a first axis (112) of rotation located on the top of said structure (108) of said seed divider (10), and comprising a first lever arm (40) for rotating said part (105) by cooperating with said first mobile actuating ring (203), when said head (200) is in said first operating mode and a second lever arm (41) for rotating said part (105) by cooperating with said second mobile actuating ring (300), when said head (200) is in said second operating mode, the passage from said first operating mode to said second operating mode or the passage from said second operating mode to said first operating mode taking place by simply turning said control part (105) in the other direction on said first axis (112) of rotation;
- a lever (106) for transferring the movement mounted mobile in rotation about a second axis (113) of rotation located on the top of the structure (108) of said seed divider (10) in a plane substantially perpendicular to that of said first axis (112) of rotation, said lever (106) being displaced on one side of said structure (108) of said seed divider (10) along which it is flush-mounted, and said lever (106) cooperating at a first (114) of its ends (114, 115) with a second lever arm (41) of said control part (105);
- an actuating arm (107) being articulated at its first (116) end with the second end (115) of said transfer lever (106) and at its second end (117) with said selective deflecting means (102), at least one part of said actuating arm (107) passing through an aperture (61) formed in said structure (108) of said seed divider (10) and isolated from said seed flow by said selective deflecting means (102);
so that said selective deflecting means (102) seal said outlet (103) for supplying seeds or said outlet (104) for returning said seeds to the trough, by transferring the movement of said control parts (105), which is initiated by rotating at least one of said first (203) or second (300) mobile actuating rings of said first or second operating mode respectively, to said actuating arm (107) by means of said lever (106) for transferring the movement.

5. Dispensing head (200) according to Claim 4, **characterised in that** said first (40) and second (41) lever arms of said control part (105) are formed in the extension of a spring (118) which is mobile in rotation about said first axis (112) of rotation located on the top of said structure (108) of said seed divider (10), said first (40) and second (41) lever arms being respectively of different lengths, so as to allow a shorter travel of said spring (118) and to maintain said spring within the lateral space (42) occupied by said seed divider (10).

6. Dispensing head (200) according to any one of Claims 4 and 5, **characterised in that** the position of said lever (106) for transferring the movement is offset by a pre-determined distance (43) relative to the position of said axis (110) of rotation of said selective deflecting means (102), so that the lateral parts (44, 45) are completely clear of said seed divider (10).

7. Dispensing head (200) according to any one of Claims 1 to 6, **characterised in that** it comprises a plurality of seed dividers (10), flush-mounted in pairs over the entire circumference (206).

8. Dispensing head (200) according to any one of Claims 1 to 7, **characterised in that** each of said seed dividers (10) comprises separate means (46) for rapid fixing by clipping onto the upper edge (62) of said pneumatic blowing tube (63) such that, once clipped in, said means (100) for passing through a portion of said flow (101) of seeds respectively conform in shape to said at least one outlet orifice (64) for said seeds formed between said lid (201) for supplying seeds and said upper edge (62) of said pneumatic blowing tube (63).

9. Dispensing head (200) according to any one of Claims 1 to 8, **characterised in that** said lid (201) for distributing said flow (101) of seeds, which is of homogeneous density, to each of said seed dividers (10), has a shape comprising in its central part a substantially planar discharge disc (71) for said blown seeds, which is of a diameter substantially equal to the diameter of said pneumatic blowing tube (63) above which it is located at a pre-determined distance,
said shape being complemented at the circumference of said discharge disc (71) by a half-ring (72) with a concavity oriented in the extension of the flow (101) of blown seeds.

10. Dispensing head (200) according to any one of Claims 1 to 9, **characterised in that** said selective deflecting means are of the flap type and mobile in rotation for sealing said outlet for supplying seeds or sealing said outlet for returning seeds to the trough of said seed divider, according to whether or not said seed divider has to allow the seeds to pass to sow a row of said plot of land.

11. Dispensing head (200) according to any one of Claims 1 to 9, **characterised in that** said outlet (104) for returning seeds to the trough is oriented substantially vertically below said seed divider (10), upstream of means for collecting said seeds located under said dispensing head (200).

12. Pneumatic seeding implement, for example of the agricultural seeding implement type, comprising a dispensing head (200) for a volume of seeds contained in a trough, said head (200) comprising means for distributing said volume of seeds along a plurality of rows to be sown of a plot of land,
said head (200) comprising at least one first operating mode in which at least one of said rows of said plot of land is not sown, and at least one second operating mode in which only one subset of adjacent rows, which correspond substantially to half the width of said seeding implement, are sown from said plurality of rows to be sown, and
said distributing head (200) being supplied by a pneumatic tube (63) for blowing said seeds contained in the trough,
**characterised in that** said distributing means comprise at least one lid (201) of pre-determined shape for distributing a flow (101) of seeds, which is of homogeneous density, to a group of seed dividers (10) in a number at least equal to said rows to be sown, each of said seed dividers (10) comprising:
- means (100) for passing a portion of said flow (100) of seeds originating from at least one orifice (64) formed between said lid (201) for supplying seeds and the edge (62) of said tube (63) for blowing seeds;
- selective means (102) for deflecting one portion of said flow (101) of seeds discharged from said passage means (100), either to an outlet (103) for supplying at least one of said rows to be sown with seeds or to an outlet (104) for returning said seeds to the trough, according to whether said first operating mode or said second operating mode is selected;
- control means (105, 106, 107) by transferring the movement of said selective deflecting means (102), displaced at least partially above and below the structure (108) of said seed divider (10), said control means being actuated by means (202) for actuating said control means (105, 106, 107), by rotating at least one first mobile actuating ring (203) of said first operating mode and/or by rotating at least one second mobile actuating ring (300) of said second operating mode.

## Patentansprüche

1. Ausgabekopf (200) eines Saatgutvolumens, das in einem Behälter einer Druckluftsämaschine enthalten ist, der Mittel zum Verteilen des Saatgutvolumens gemäß mehrerer zu besäender Reihen einer Parzelle aufweist, wobei der Ausgabekopf (200) mindestens eine erste Betriebsart gestattet, in der mindestens eine der Reihen der Parzellen nicht besät wird, und mindestens eine zweite Betriebsart, in der nur eine Untereinheit benachbarter Reihen, die im Wesentlichen einer halben Breite der Sämaschine entspricht, von den mehreren zu besäenden Reihen besät wird,
wobei der Ausgabekopf (200) von einer Leitung (63) zum pneumatischen Blasen des Saatguts, das in dem Behälter enthalten ist, versorgt wird,
**dadurch gekennzeichnet, dass** die Verteilungsmittel mindestens einen Deckel mit vorbestimmter Verteilungsform eines in seiner Dichte homogenen Stroms Saatkörner innerhalb einer Einheit von Saatguttrennern (10) mit einer Anzahl von mindestens gleich den zu besäenden Reihen aufweisen, wobei die Saatguttrenner (10) Folgendes aufweisen:
- Mittel (100) zum Übergehen eines Teils des Saatgutstroms (100), der von mindestens einer Öffnung (64) kommt, die zwischen dem Versorgungsdeckel (201) und dem Rand (62) der Saatgutblasleitung (63) ausgebildet ist;
- selektive Mittel (102) zum Umlenken eines Teils des Saatgutstroms (101) am Ausgang der Durchgangsmittel (100), entweder zu einem Saatgutversorgungsausgang (103) für mindestens eine der zu besäenden Reihen, oder zu einem Rücklaufausgang (104) zum Behälter des Saatguts je nachdem, ob die erste oder die zweite Betriebsart ausgewählt ist;
- Mittel (105, 106, 107) zum Steuern durch Bewegungsübertragung der Umlenkauswahlmittel (102), die mindestens zum Teil über und unter der Struktur (108) des Saatguttrenners (10) versetzt sind, wobei die Steuermittel durch Mittel (202) zum Betätigen der Steuermittel (105, 106, 107) durch Indrehungversetzen mindestens eines ersten beweglichen Kranzes (203) zum Aktivieren der ersten Betriebsart und/oder Indrehungversetzen mindestens eines zweiten beweglichen Betätigungskranzes (300) der zweiten Betriebsart betätigt werden.

2. Ausgabekopf (200) nach Anspruch 1, **dadurch gekennzeichnet, dass** die Betätigungsmittel (202) an mindestens einem ersten Teil (204) mit dem Verteilungsdeckel (201) des Saatgutstroms (101) und an mindestens einem zweiten Teil (205) mit entweder dem ersten (204) oder zweiten (300) Betätigungskranz fest verbunden sind.

3. Ausgabekopf (200) nach einem der Ansprüche 1 und 2, **dadurch gekennzeichnet, dass** die Umlenkauswahlmittel (102) des Saatgutstroms (101) in Drehung (109) um eine Drehachse (110) beweglich montiert sind, die in einer Zone der Innenstruktur (108) des Saatguttrenners (202) positioniert ist, die sich im Wesentlichen an der Schnittstelle des Saatgutversorgungsausgangs (103) und des Rücklaufausgangs (104) zu dem Behälter des Saatguts befindet,
und dass mindestens ein Teil (111) der Umlenkauswahlmittel (102) Schutz- und Abdichtmittel der Drehachse (110) gegenüber dem Saatgutstrom (101), der die Durchgangsmittel (100) durchquert, bildet.

4. Ausgabekopf (200) nach einem der Ansprüche 2 und 3, **dadurch gekennzeichnet, dass** die Steuermittel (105, 106, 107) jedes der Saatguttrenner (10) Folgendes aufweisen:
- einen umkehrbaren Steuerteil (105), der in Drehung um eine erste Drehachse (112), die auf der Oberseite der Struktur (108) des Saatguttrenners (10) positioniert ist, beweglich montiert ist und einen ersten Hebelarm (40) zum Indrehungversetzen des Teils (105) durch Zusammenwirken mit dem ersten beweglichen Betätigungskranzes (203) aufweist, wenn sich der Kopf (200) in der ersten Betriebsart befindet, und einen zweiten Hebelarm (41) zum Indrehungversetzen des Teils (105) durch Zusammenwirken mit dem zweiten beweglichen Betätigungskranz (300), wenn sich der Kopf (200) in der zweiten Betriebsart befindet, wobei der Übergang von der ersten auf die zweite Betriebsart oder der Übergang von der zweiten auf die erste Betriebsart durch einfaches Umkehren des Steuerteils (105) auf der ersten Drehachse (112) erfolgt;
- einen Bewegungsübertragunghebel (106), der in Drehung um eine zweite Drehachse (113), die auf der Oberseite der Struktur (108) des Saatguttrenners (10) positioniert ist, in einer Ebene im Wesentlichen senkrecht zu der der ersten Drehachse (112) beweglich montiert ist, wobei der Hebel (106) auf einer Seite der Struktur (108) des Saatguttrenners (10), entlang welcher er bündig montiert ist, verlagert ist, und wobei der Hebel (106) an einem ersten (114) seiner Enden (114, 115) mit einem zweiten Hebelarm (41) des Steuerteils (105) zusammenarbeitet;
- einen Betätigungsarm (107), der an seinem ersten Ende (116) mit dem zweiten Ende (115) des Übertragungshebels (106) und an seinem zweiten Ende (117) mit den Umlenkauswahlmitteln (102) angelenkt ist, wobei mindestens ein Teil des Betätigungsarms (107) ein Fenster (61) durchquert, das in der Struktur (108) des Saatguttrenners (10) ausgebildet und von dem Saatgutstrom von den Umlenkauswahlmitteln (102) isoliert ist;
so dass die Umlenkauswahlmittel (102) den Versorgungsausgang (103) mit Saatgut oder den Rücklaufausgang (104) zum Behälter durch Übertragungen von Bewegung von dem Steuerteil (105), ausgelöst durch Indrehungversetzen mindestens entweder des ersten (203) oder zweiten (300) beweglichen Betätigungskranzes der ersten oder zweiten Betriebsart, auf den Betätigungsarm (107) über den Bewegungsübertragunghebel (106) verschließen.

5. Ausgabekopf (200) nach Anspruch 4, **dadurch gekennzeichnet, dass** der erste (40) und der zweite (41) Hebelarm des Steuerteils (105) in der Verlängerung einer Feder (118) ausgebildet sind, die in Drehung um die erste Drehachse (112), die auf der Oberseite der Struktur (108) des Saatguttrenners (10) positioniert ist, ausgebildet sind, wobei der erste (40) und der zweite (41) Hebelarm jeweils unterschiedliche Längen haben, so dass ein leichtes Ausschlagen der Feder (118) gestattet und diese Letztere in dem seitlichen Raum (42) des Saatguttrenners (10) gehalten wird.

6. Ausgabekopf (200) nach einem der Ansprüche 4 und 5, **dadurch gekennzeichnet, dass** die Position des Bewegungsübertragungshebels (106) um eine vorbestimmte Entfernung (43) in Bezug zu der Position der Drehachse (110) der Umlenkauswahlmittel (102) derart versetzt ist, dass die Seitenteile (44, 45) des Saatguttrenners (10) komplett freigelegt sind.

7. Ausgabekopf (200) nach einem der Ansprüche 1 bis 6, **dadurch gekennzeichnet, dass** er mehrere Saatguttrenner (10) aufweist, die in Paaren bündig auf seinem Umfang (206) installiert sind.

8. Ausgabekopf (200) nach einem der Ansprüche 1 bis 7, **dadurch gekennzeichnet, dass** jeder der Saatguttrenner (10) einzige Mittel (46) zum schnellen Befestigen durch Einrasten auf dem oberen Rand (62) der Druckluftblasleitung (63) aufweist, so dass sich die Durchgangsmittel (100) eines Teils des Saatgutstroms (100), wenn sie eingerastet sind, jeweils sich an mindestens eine Ausgangsöffnung (64) des Saatguts, die zwischen dem Versorgungsdeckel (201) und dem oberen Rand (62) der Druckluftblasleitung (63) ausgebildet ist, fügen.

9. Ausgabekopf (200) nach einem der Ansprüche 1 bis 8, **dadurch gekennzeichnet, dass** der Deckel (201) zur in Dichte homogenen Verteilung des Saatgutstroms (101) zu jedem der Saatguttrenner (10) eine Form besitzt, die in ihrem zentralen Teil eine im Wesentlichen ebene Zersprengscheibe (71) der geblasenen Körner mit einem Durchmesser aufweist, der im Wesentlichen gleich dem Durchmesser der Druckluftblasleitung (63) ist, über welcher sie in einer vorbestimmten Entfernung positioniert ist,
wobei die Form am Umfang der Zersprengscheibe (71) um einen Halbkranz (72) mit einer Konkavität, die in der Verlängerung des Stroms (101) geblasener Körner ausgerichtet ist, ergänzt ist.

10. Ausgabekopf (200) nach einem der Ansprüche 1 bis 9, **dadurch gekennzeichnet, dass** die Umlenkauswahlmittel des Typs Klappe sind, die in Drehung zum Verschließen des Ausgangs zum Versorgen mit Körnern oder Verschließen des Rücklaufausgangs zum Behälter des Saatguttrenners je nachdem beweglich sind, ob dieser Letztere das Saatgut zum Säen einer Reihe der Parzelle durchlassen soll oder nicht.

11. Ausgabekopf (200) nach einem der Ansprüche 1 bis 9, **dadurch gekennzeichnet, dass** der Rücklaufausgang (104) des Saatguts zum Behälter im Wesentlichen senkrecht unter dem Saatguttrenner (10) stromaufwärts von Sammelmitteln des Saatguts, die unter dem Ausgabekopf (200) positioniert sind, ausgerichtet ist.

12. Druckluftsämaschine, zum Beispiel des Typs landwirtschaftliche Sämaschine, die einen Ausgabekopf (200) für ein Volumen an Saatgut, das in einem Behälter enthalten ist, aufweist, wobei der Kopf (200) Mittel zum Verteilen des Saatgutvolumens entlang mehrerer zu besäender Reihen einer Parzelle aufweist,
wobei der Kopf (200) mindestens eine erste Betriebsart aufweist, in der mindestens eine der Reihen der Parzelle nicht besät wird, und mindestens eine zweite Betriebsart, in der nur eine Untereinheit benachbarter Reihen, die im Wesentlichen einer halben Breite der Sämaschine entspricht, von den mehreren zu besäenden Reihen besät werden, und
wobei der Ausgabekopf (200) durch eine Leitung (63) zum pneumatischen Blasen des in dem Behälter enthaltenen Saatguts versorgt wird,
**dadurch gekennzeichnet, dass** die Verteilungsmittel mindestens einen Deckel (201) mit vorbestimmter Form zum Verteilen eines in Dichte homogenen Saatgutstroms (101) zu einer Einheit von Saatguttrennern (10) in einer Anzahl, die mindestens gleich der der zu besäenden Reihen ist, aufweisen, wobei jeder der Saatguttrenner (10) Folgendes aufweist:
- Mittel (100) zum Durchgehen eines Teils des Saatgutstroms (100), der von mindestens einer Öffnung (64) kommt, die zwischen dem Versorgungsdeckel (201) und dem Rand (62) der Saatgutblasleitung (63) ausgebildet ist;
- Auswahlmittel (102) zum Umlenken eines Teils des Saatgutstroms (101) am Ausgang der Durchgangsmittel (100) entweder zu einem Ausgang (103) zum Versorgen mindestens einer der zu besäenden Reihen mit Saatgut, oder zu einem Ausgang (104) zum Rücklauf zum Behälter des Saatguts, je nachdem, ob die erste oder die zweite Betriebsart ausgewählt ist;
- Steuermittel (105, 106, 107) durch Bewegungsübertragung der Umlenkauswahlmittel (102), die mindestens zum Teil über und unter der Struktur (108) des Saatguttrenners (10) versetzt sind, wobei die Steuermittel durch Betätigungsmittel (202) der Steuermittel (105, 106, 107) durch Indrehungversetzen mindestens eines beweglichen Betätigungskranzes (203) der ersten Betriebsart und/oder durch Indrehungversetzen mindestens eines zweiten beweglichen Betätigungskranzes (300) der zweiten Betriebsart betätigt werden.
